(19) Europäisches Patentamt
European Patent Office
Office européen des brevets

(11) **EP 1 150 191 A2**

(12) **EUROPÄISCHE PATENTANMELDUNG**

(43) Veröffentlichungstag:
**31.10.2001 Patentblatt 2001/44**

(51) Int Cl.7: **G05B 19/408**, G05B 19/416

(21) Anmeldenummer: **01105182.8**

(22) Anmeldetag: **02.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.03.2000 DE 10016317**

(71) Anmelder: **EMCO Maier Gesellschaft m.b.H.**
**5400 Hallein-Taxach (AT)**

(72) Erfinder: **Reiter, Georg**
**5071 Wals (AT)**

(74) Vertreter: **Schaumburg, Thoenes & Thurn**
**Postfach 86 07 48**
**81634 München (DE)**

(54) **Verfahren zum Regeln der Bahnbewegung eines angetriebenen Organs**

(57) Ein Verfahren zum Regeln der Bewegung eines Organs, insbesondere eines Werkzeugs einer Werkzeugmaschine, das durch einen ersten Antrieb (M) um eine Drehachse (C) drehbar und durch einen zweiten Antrieb (M) radial zur Drehachse (C) verstellbar ist, entlang einer Bewegungsbahn in einer zur Drehachse (C) senkrechten Bahnebene, wobei die Bewegungsbahn in einem kartesischen Koordinatensystem (x1, y1) vorgegeben wird, umfaßt folgende Schritte:

in einem virtuellen kartesischen zweidimensionalen Koordinatensystem (x1, y1) wird für jede Achse im Reglertakt ein mathematisches Modell berechnet, das dem Verhalten eines P-Reglers zweiter Ordnung mit Verzögerung entspricht;

aus den beiden Modellen werden die Geschwindigkeitsgrößen und die Positionsgrößen für das Organ abgeleitet und durch eine Vorwärtstransformation in Geschwindigkeitsgrößen bezüglich der durch die Antriebe (M, M) definierten physikalischen Achsen (C, X) transformiert;

die transformierten Größen werden als Sollwerte $(V_{soll}(vX), V_{soll}(vC))$ für die Ansteuerung des ersten und des zweiten Antriebes (M, M) verwendet;

die Istwerte $(X_{ist}, C_{ist})$ werden durch entsprechende Istwertgeber (G, G) an den Antrieben erfaßt und in das virtuelle kartesische Koordinatensystem rücktransformiert;

die rücktransformierten Werte $(x1_{ist}, y1_{ist})$ werden im mathematischen Modell mit den berechneten Werten verglichen und

bei Auftreten einer Differenz werden entsprechende Korrekturwerte abgeleitet.

Fig. 3

**Beschreibung**

Die Erfindung betrifft ein Verfahren zum Regeln der Bewegung eines Organs, insbesondere eines Werkzeuges einer Werkzeugmaschine, das durch einen ersten Antrieb um eine Drehachse drehbar und durch einen zweiten Antrieb radial zur Drehachse verstellbar ist, entlang einer Bewegungsbahn in einer zur Drehachse senkrechten Bahnebene, wobei die Bewegungsbahn in einem kartesischen Koordinatensystem vorgegeben wird.

Um beispielsweise auf einer CNC-Drehmaschine mit angetriebenen Werkzeugen eine Fräsoperation ausführen zu können, wird die Bahn des Werkzeuges üblicherweise in einem zweidimensionalen kartesischen Koordinatensystem beschrieben, das in einer zur Drehachse senkrechten Ebene aufgespannt wird, die der Stirnseite eines in dem Hauptspindelhalter der Drehmaschine eingespannten Werkstückes entspricht. Das Problem besteht nun darin, daß das Werkzeug um die Achse der Hauptspindel (Rundachse oder C-Achse) drehbar und entlang einer zu dieser radialen Linearachse (X-Achse) verstellbar ist, so daß die im kartesischen Koordinatensystem geltenden Positions- und Geschwindigkeitsgrößen nicht unmittelbar für die Regelung der Antriebe zum Verstellen des Werkzeuges verwendet werden können.

Der Erfindung liegt die Aufgabe zugrunde, ein Verfahren der eingangs genannten Art anzugeben, mit dem auf einfache und zuverlässige Weise es ermöglicht wird, den Drehantrieb für die Rundachse und den Antrieb für die Bewegung entlang der Linearachse derart zu regeln, daß die im virtuellen kartesischen Koordinatensystem vorgegebene Bewegungsbahn des Organs in der zur Rundachse senkrechten Ebene abgebildet wird.

Diese Aufgabe wird bei einem Verfahren der eingangs genannten Art durch folgende Schritte gelöst:

In einem virtuellen kartesischen zweidimensionalen Koordinatensystem wird für jede Achse im Reglertakt ein mathematisches Modell berechnet, das dem Verhalten eines P-Reglers zweiter Ordnung mit Verzögerung entspricht;

aus den beiden Modellen werden die Geschwindigkeitsgrößen und die Positionsgrößen für das Organ abgeleitet und durch eine Vorwärtstransformation in Geschwindigkeitsgrößen bezüglich der durch die Antriebe definierten physikalischen Achsen transformiert;

die transformierten Größen werden als Sollwerte für die Ansteuerung des ersten und des zweiten Antriebes verwendet;

die Istwerte werden durch entsprechende Istwertgeber an den Antrieben erfaßt und in das virtuelle kartesische Koordinatensystem rücktransformiert;

die rücktransformierten Werte werden im mathematischen Modell mit den berechneten Werten verglichen und

bei Auftreten einer Differenz werden entsprechende Korrekturwerte abgeleitet.

Damit erhält man einen geschlossenen Regelkreis der zwei mathematische Modelle und zwei physikalische Achsen koppelt.

Die folgende Beschreibung erläutert in Verbindung mit den beigefügten Zeichnungen die Erfindung anhand eines Ausführungsbeispieles. Es zeigen:

Fig. 1  eine schematische Darstellung der Koordinatensysteme zur Erläuterung der Problemstellung,

Fig. 2  eine schematische Darstellung eines mathematischen Modells für jede Achse im kartesischen Koordinatensystem und

Fig. 3  eine schematische Darstellung des erfindungsgemäßen Regelungsverfahrens.

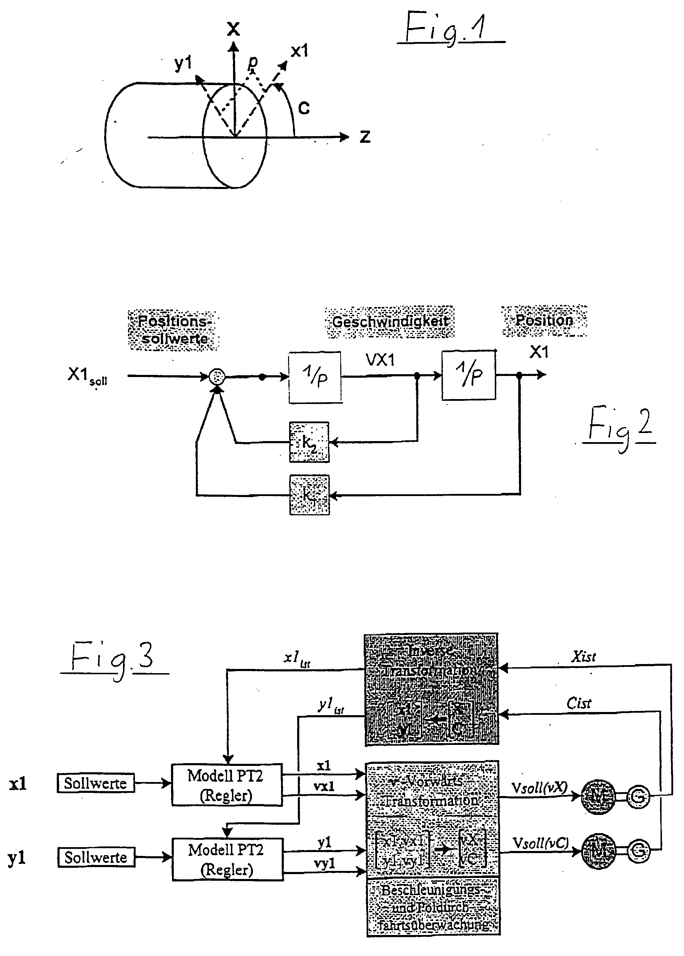

Figur 1 zeigt die für die erfindungsgemäße Regelung verwendeten Koordinatensysteme. Das kartesische Koordinatensystem umfaßt die Achsen x1,y1 und z, wobei die z-Achse bei einer Drehmaschine mit der Spindelachse zusammenfällt, während die x1 und die y1-Achse eine Ebene aufspannen, in der die Bahnkurve liegt, entlang der sich das Werkzeug, beispielsweise ein Fräswerkzeug einer CNC-Drehmaschine bewegen soll.

Im Gegensatz zu dem virtuellen kartesischen Koordinatensystem wird das physikalische System durch die zur Z-Achse parallele Rundachse C, um die sich beispielsweise das Fräswerkzeug dreht, und die hierzu senkrechte Linearachse X gekennzeichnet. Diesen beiden Achsen entsprechen ein erster bzw. ein zweiter Antrieb, um das Werkzeug entlang der vorgegebenen Bahn zu bewegen.

Für die Ansteuerung der Antriebe muß also eine Position p (x1,y1) im kartesischen Koordinatensystem in eine Position p (X, C) im physikalischen System umgewandelt werden. Die erforderlichen Transformationsgleichungen lauten:

$$X = \sqrt{(x1^2 + y1^2)}$$

und

$$c = \pi/2 - \arctan(y1/x1)$$

Die Rückwärtstransformationsgleichungen:

$$x1 = X * \cos(\pi/2 - C)$$

$$y1 = X * \sin(\pi/2 - C)$$

Die Vorwärtstransformationsgleichungen für die Geschwindigkeiten lauten:

$$vX = \delta X/\delta t = (x1 * vx1 + y1 * vy1) \sqrt{(x1^1 + y1^2)}$$

$$vC = \delta C/\delta t = (vx1 * y1 - vy1 * x1)/(x1^2 + y1^2)$$

$$\text{mit: } vx1 = \delta x1/\delta t, vy1 = \delta y1/\delta t, \ vX = \delta X/\delta t \ und \ vC = \delta C/\delta t$$

Die Bahnregelung wird folgendermaßen durchgeführt:

Im virtuellen kartesischen x1/y1 Koordinatensystem wird für jede Achse ein mathematisches Modell im Reglertakt berechnet, das dem Verhalten eines P-Reglers zweiter Ordnung mit Verzögerung entspricht, wobei dieses Modell zwei identische Pole enthält und damit den asymptotischen Grenzfall repräsentiert (regelungstechnische Betrachtung). Dieses Modell läßt sich durch die Laplacetransformierte Zustandsdarstellung mit der komplexen Frequenz p beschreiben, wie dies in Figur 2 z.B. für die Achse X1 schematisch dargestellt ist.

Die Zustandsdarstellung für zwei Zustandsgrößen x1 (Position) und vx1 (Geschwindigkeit) mit $vx1 = \delta x1/\delta t$ als Laplacetransformierte Gleichungen:

$$L\{x1(t)\} \Rightarrow X1(p) \ und \ L\{vx1(t)\} \Rightarrow VX1(p)$$

$$p * X1 = VX1$$

$$p * VX1 = X1_{soll} + k1 * X1 + k2 * VX1$$

Die Konstanten k1 und k2 sind dabei so gewählt, daß zwei identische Pole in der Übertragungsfunktion $X1/X1_{soll}$ entstehen.

Mit je einem Modell für die virtuellen kartesischen Koordinaten x1/y1 wird nun durch folgende Maßnahmen eine Regelung für die physikalischen Achsen X und C erreicht:

Aus den beiden Modellen für x1 und y1 werden die Geschwindigkeitsgrößen vx1 und vy1 und die Positionsgrößen x1 und y1 abgeleitet und mit der Geschwindigkeits-Vorwärtstransformation in die Geschwindigkeiten der physikalischen Achsen vX und vC umgewandelt, wie man dies in Figur 3 erkennt. Diese Geschwindigkeiten werden nun als Sollwerte für die drehzahlgeregelten Antriebe M (Figur 3), beispielsweise als Frequenzvorgabe für einen Schrittmotor ausgegeben.

Die Istwerte $X_{ist}$ und $C_{ist}$ der Positionen der physikalischen Achsen werden nun durch einen mit dem jeweiligen Antrieb M gekoppelten Inkrementalgeber G oder durch einen Zählerbaustein bei einem Schrittmotorantrieb erfaßt und über die Rücktransformation in die virtuellen kartesischen Koordinaten $x1_{ist}$ und $y1_{ist}$ umgerechnet. Im mathematischen Modell für jede kartesische Achse (Figur 2) wird nun nicht die Modellposition (x1 bzw. y1) über den Verstärkungsfaktor k1 zurückgekoppelt, sondern die gemessene und transformierte Istposition $x1_{ist}$ bzw.$y1_{ist}$. Damit wird der Regelkreis im virtuellen kartesischen Koordinatensystem wird geschlossen, wobei die beiden mathematischen Modelle und die beiden physikalischen Achsen gekoppelt werden.

**Patentansprüche**

1. Verfahren zum Regeln der Bewegung eines Organs, insbesondere eines Werkzeugs einer Werkzeugmaschine, das durch einen ersten Antrieb (M) um eine Drehachse (C) drehbar und durch einen zweiten Antrieb (M) radial zur Drehachse (C) verstellbar ist, entlang einer Bewegungsbahn in einer zur Drehachse (C) senkrechten Bahnebene, wobei die Bewegungsbahn in einem kartesischen Koordinatensystem (x1, y1) vorgegeben wird, **gekennzeichnet durch** folgende Schritte:

   in einem virtuellen kartesischen zweidimensionalen Koordinatensystem (x1,y1 ) wird für jede Achse im Reglertakt ein mathematisches Modell berechnet, das dem Verhalten eines P-Reglers zweiter Ordnung mit Verzögerung entspricht;

   aus den beiden Modellen werden die Geschwindigkeitsgrößen und die Positionsgrößen für das Organ abgeleitet und **durch** eine Vorwärtstransformation in Geschwindigkeitsgrößen bezüglich der **durch** die Antriebe (M, M) definierten physikalischen Achsen (C, X) transformiert;

   die transformierten Größen werden als Sollwerte ($V_{soll}$(vX), $V_{soll}$(vC)) für die Ansteuerung des ersten und des zweiten Antriebes (M, M) verwendet;

   die Istwerte ($X_{ist}$, $C_{ist}$) werden **durch** entsprechende Istwertgeber (G, G) an den Antrieben erfaßt und in das virtuelle kartesische Koordinatensystem rücktransformiert;

   die rücktransformierten Werte ($x1_{ist}$, $y1_{ist}$) werden im mathematischen Modell mit den berechneten Werten verglichen und

   bei Auftreten einer Differenz werden entsprechende Korrekturwerte abgeleitet.

2. Verfahren nach Anspruch 1, **dadurch gekennzeichnet, daß** die Konstanten in den mathematischen Modellen so gewählt werden, daß das jeweilige Modell zwei identische Pole enthält.

Fig.1

Fig 2

Fig.3